# EUROPÄISCHE PATENTANMELDUNG

(11) **EP 1 000 589 A2**
(43) Veröffentlichungstag der Anmeldung: **17.05.2000**
(21) Anmeldenummer: 99122296.9
(22) Anmeldetag: 09.11.1999
(51) Int. Cl.: A61C 19/045

(54) **Schnellübertragungsbogen**

(30) Priorität: 09.11.1998 DE 19851443; 21.09.1999 DE 19945098
(71) Anmelder: Synthese Dentale Forschungs- und Entwicklungsgesellschaft mbH, 56457 Westerburg (DE)
(72) Erfinder: Cramer, Rudolf, 83679 Sachsenkam (DE); Reusch, Diether, Dr., 56457 Westerburg (DE)
(74) Vertreter: Patentanwälte Lippert, Stachow, Schmidt & Partner

(57) **Zusammenfassung**

Die Erfindung betrifft einen Schnellübertragungsbogen zur schädelgerechten Übertragung eines Oberkiefergipsmodells von einem Patienten in einen Dental-Artikulator sowie zur Aufzeichnung der achsbezogenen individuellen Kiefergelenkgeometrie der betreffenden Patienten.

Durch die Erfindung soll ein Schnellübertragungsbogen geschaffen werden, der bei einfacher Handhabung eine schnelle Erfassung der Patientendaten, d.h. der Unterkieferbewegungen sowie der Patientenachse und deren Übertragung in einen Dental-Artikulator oder ein Montagegerät ermöglicht.

Die Erfindung zeichnet sich dadurch aus, daß der Flaggenbogen (1) mittels Federkraft gegen die hintere Gehörgangwand und/oder die Glabella bzw. Stirnabstützung (51) gespannt wird, daß die Flaggen (2) jeweils an einem Endstück (7) befestigt sind, das mit dem Flaggenbogen (1) lösbar verbunden ist, daß an jeder Flagge (2) ein Winkeltisch (27) winkelverstellbar und lösbar fixierbar ist, daß die Schreibköpfe (22, 22a) sowohl auf die Flagge (2), als auch auf den Winkeltisch (27) positionierbar sind, und daß neben jeder Flagge (2) eine Zentrierspitze (20) in einer angenommenen oder tatsächlichen Patientenachse positionierbar ist.

## Beschreibung

Die Erfindung betrifft einen Schnellübertragungsbogen zur schädelgerechten Übertragung eines Oberkiefergipsmodells von einem Patienten in einen Dental-Artikulator sowie zur Aufzeichnung der achsbezogenen individuellen Kiefergelenkgeometrie der betreffenden Patienten, enthaltend einen Flaggenbogen mit kiefergelenknahen Flaggen und Ohroliven oder Ohrauflagen sowie eine Glabellastütze zur ortsfesten Fixierung am Kopf und einen Registrierbogen, an dem eine Bißgabel zur Betätigung der am Registrierbogen befindlichen Schreibköpfe zur Aufzeichnung der saggitalen Scharnierachsbewegung befestigt ist.

Derartige Schnellübertragungsbögen üblicher Bauart (z.B. DE 42 11 016 A1, DE 42 11 018 A1) sind dadurch gekennzeichnet, daß diese nicht in der Lage sind, beide Forderungen, d.h. die schädelgerechte Übertragung des Oberkiefergipsmodells und die Aufzeichnung der achsbezogenen individuellen Kiefergelenkgeometrie, gleichzeitig zu erfüllen. So gehen in der Regel sogenannte "Quick Mount"-Bögen von einer arbiträren Scharnierachse aus. Der Vorteil liegt hier in der einfachen und schnellen Handhabung. Der Nachteil ist allerdings darin zu sehen, daß eine achsbezogene Kiefergelenkgeometrie nicht aufgezeichnet werden kann.

Ein Teil der Schnellübertragungsbögen wird von außen auf arbiträre Achspunkte ausgerichtet, ein anderer Teil wird in den Gehörgängen verankert und mit einer Glabellastütze nach vorne verspannt.

Bei dieser Art der Befestigung am Schädel kollidieren die Ohrstöpsel mit den anatomischen posterioren Kiefergelenkstützen, so daß sich der Übertragungsbogen am Schädel bewegt, wenn der Unterkiefer Pro-/Medio-/Laterotrusionsbewegungen ausführt. Eine Aufzeichnung der Achsbewegungen der Unterkiefer ist somit prinzipiell nicht möglich.

Zur Aufzeichnung der Unterkieferbewegung führt der Patient üblicherweise zunächst eine Pro-/Retrusionsbewegung durch. Die am Registrierbogen befestigten Schreibvorrichtungen zeichnen dabei auf den am Gesichtsbogen befindlichen Flaggen die dabei auftretende Bewegung in der Saggitalen und die Gelenkbahnneigung (HKN) auf.

Zur Bestimmung der Bennettbewegung wird der Unterkiefer nach rechts und links bewegt. Der Seitenversatz des Unterkiefers wird durch die Abstandsänderung der Schreibvorrichtungen gegenüber den Flaggen ermittelt.

Die Aufzeichnung der Bennettbewegung kann beispielsweise über eine Meßuhr erfolgen, wobei die Wegstrecke der Gelenkbahn zeitgleich mit der Meßuhr abgelesen werden muß. Die abgelesenen Wertepaare werden über Tabellen in eine Bennettkurve umgerechnet.

Wegen der Vielzahl der notwendigen Arbeitsschritte ist es wünschenswert, eine Vereinfachung und gleichzeitig eine Erhöhung der Genauigkeit der dreidimensionalen Gelenkbahnaufzeichnung zu erreichen.

Der Erfindung liegt deshalb die Aufgabe zugrunde, einen Schnellübertragungsbogen zu schaffen, der bei einfacher Handhabung eine schnelle Erfassung der Patientendaten, d.h. der Unterkieferbewegungen und der Patientenachse, und deren Übertragung in einen Dental-Artikulator oder ein Montagegerät ermöglicht.

Die der Erfindung zugrundeliegende Aufgabe wird bei einem Schnellübertragungsbogen der eingangs genannten Art dadurch gelöst, daß der Flaggenbogen mittels Federkraft gegen die hintere Gehörgangwand und/oder die Glabella bzw. Stirnabstützung gespannt wird, daß die Flaggen jeweils an einem Endstück befestigt sind, das mit dem Flaggenbogen lösbar verbunden ist, daß an jeder Flagge ein Winkeltisch winkelverstellbar und lösbar fixierbar ist, daß die Schreibköpfe sowohl auf die Flagge, als auch auf den Winkeltisch positionierbar sind, und daß neben jeder Flagge eine Zentrierspitze in einer angenommenen oder tatsächlichen Patientenachse positionierbar ist.

Damit läßt sich mit dem Schnellübertragungsbogen eine dreidimensionale Aufzeichnung der Unterkieferbewegungen, wie die HKN-Bahnen und die Bennettbewegung, vornehmen, ohne daß zusätzliche Meßvorrichtungen erforderliche wären. D.h., der Schnellübertragungsbogen ist für alle Vermessungen geeignet. Dadurch reduziert sich der Aufwand erheblich, wobei gleichzeitig eine Verbesserung der Genauigkeit der Aufzeichnung erreicht wird. Durch die neben den Flaggen positionierbaren Zentrierspitzen läßt sich darüberhinaus die Patientenachse nach deren Ermittlung und nach der Entfernung der Endstücken von den Schenkeln des Schnellübertragungsbogens auf einfache Weise auf einen Dental-Artikulator oder ein Montagegerät übertragen.

Um die Schreibspitzen bzw. die Zentrierspitzen auf eine arbiträre Patientenachse einstellen zu können, sind die Flaggen jeweils mit einer Achsbohrung versehen. Das vereinfacht das Anlegen des Registrierbogens am Patienten und erleichtert die Positionierung des Übertragungsbogens an einem Montagegerät oder Artikulator mit Zentrierspitzen.

Für die einfache Positionierung der Zentrierspitze neben den Flaggen ist eine Fortführung der Erfindung dadurch gekennzeichnet, daß am Flaggenbogen Montagevorrichtungen fixierbar sind, die mit der auf der Flagge positionierbaren Zentrierspitze versehen sind, wobei die Zentrierspitze in einem längs verschiebbaren und an der Montagevorrichtung feststellbaren Träger eingesetzt ist.

Bevorzugt ist der Winkeltisch über eine Klemmvorrichtung mit der Flagge verbunden, so daß die Einstellung desselben auf den Achspunkt und entsprechend der Kiefergelenkbahnneigung sehr einfach möglich ist.

Die Klemmvorrichtung besteht aus einer am Winkeltisch anliegenden Andruckplatte und einer im Abstand dazu angeordneten und mit der Andruckplatte verbundenen schwenkbaren Klemmbacke, wobei die Klemmbacke entgegen einer Federkraft in Richtung zur Andruckplatte schwenkbar ist.

In einer weiteren Ausführung kann der Winkeltisch über eine Magnethalterung mit der Flagge verbunden werden.

Der Winkeltisch kann auch direkt an den Schenkeln des Flaggenbogens bzw. an den Endstücken befestigt werden.

In weiterer Fortbildung der Erfindung sind die Seitenarme des Registrierbogens so ausgestattet, daß die Schreibköpfe auswechselbar sind. Die Schreibköpfe sind dabei derart ausgestattet, daß der einmal auf die Achse eingestellte Registrierbogen für die HKN Aufzeichnung und die Bennettaufzeichnung nicht mehr neu justiert werden muß. Damit kann eine unmittelbare dreidimensionale Aufzeichnung der Kieferbewegung erfolgen. Anstelle der beschriebenen mechanischen Gelenkbahnaufzeichnung ist es selbstverständlich auch möglich, eine elektronische Gelenkbahnaufzeichnung vorzusehen.

Wegen der Änderung des Abstandes Flagge/Schreibspitze bei Seitwärtsbewegungen ist es erforderlich, daß mechanische oder auch elektrische Schreibspitzen federgelagert sind.

In Fortführung der Erfindung ist weiterhin das vordere Ende des Flaggenbogens mit einer Halterung zur Aufnahme einer Schreibplatte versehen, an der ein Schreibstift anlegbar ist, der am Stiel der Bißgabel einstellbar befestigt ist. Damit lassen sich auf einfache Weise die Kieferbewegungen, d.h. die Bewegungen des Frontzahnes, aufzeichnen und mit Hilfe dieser Aufzeichnungen der Dental-Artikulator so einstellen, daß dieser exakt die Kieferbewegungen nachvollzieht.

Eine andere Ausgestaltung der Erfindung ist noch dadurch gekennzeichnet, daß am Flaggenbogen Stirnabstützungen angebracht werden können. Diese haben die Aufgabe, den Flaggenbogen zusätzlich an der Stirn gegen ungewollte Bewegungen zu stabilisieren. Unbedingt benötigt werden die Stirnabstützungen dann, wenn die Flaggenendstücke mit Ohrolive gegen Flaggenendstücke für die Ohrsattelauflage ausgetauscht werden.

Weiterhin können abgeflachte Ohroliven verwendet werden, die in Richtung zur Glabellastütze hin abgef lacht sind, so daß ein Freiraum für den Unterkiefer geschaffen und somit eine Entlastung für den Patienten erreicht wird.

In solchen Fällen, in denen patientenbedingt keine Ohroliven zur Fixierung des Flaggenbogens eingesetzt werden können, sieht eine Ausführungsform der Erfindung vor, anstelle der Ohroliven Ohrsattelauflagen zu verwenden, die mittels senkrechter Stützen an einem jeweils einem seitlichen Schenkel des Flaggenbogens zugeordneten Endstück befestigt sind.

Die Endstücken sind bevorzugt austauschbar an den jeweiligen Schenkeln befestigt.

In einer Fortbildung der Erfindung ist an jedem Endstück eine Flagge für eine mechanische oder elektronische Gelenkbahnauf zeichnung befestigt.

Um eine möglichst gute Anpassung an die anatomischen Gegebenheiten zu ermöglichen, ist vorgesehen, daß der senkrechte Steg höhenverstellbar ist.

Die Erfindung soll nachfolgend an einem Ausführungsbeispiel unter Bezugnahme auf einzelne Zeichnungsfiguren näher erläutert werden. Dabei zeigen:
- Fig. 1: einen Schnellübertragungsbogen zur Ermittlung der Patientendaten und zur Übertragung derselben auf einen Dental-Artikulator;
- Fig. 2: den mit einem Gummiband an einem Kopf befestigten Schnellübertragungsbogen zur Aufzeichnung der Pro- und Retrusionsbewegungen, ausgehend von einer orbiträren Scharnierachse;
- Fig. 3: den Schnellübertragungsbogen nach Fig. 1 mit einem Winkeltisch zur Aufzeichnung der Bennettbewegung ausgehend von einem orbiträren Achspunkt;
- Fig. 4: einen am Flaggenbogen des Schnellübertragungsbogens befestigten Winkeltisch;
- Fig. 5: die Vorderansicht nach Fig. 4;
- Fig. 6: eine mit einer Magnethalterung versehene Flagge zur Befestigung des Winkeltisches;
- Fig. 7: einen auf den Achspunkt X eingestellten Seitenarm 31 mit Schreibkopf 22 für die Gelenkbahnaufzeichnung (HKN);
- Fig. 8: einen zu Fig. 7 unverändert eingestellten Seitenarm 31 mit einem Winkeltisch 27 und einem Schreibkopf 22A für die Bennett-Gelenkbahn 53, wobei die Schreibspitze automatisch auf den Achspunkt X trifft;
- Fig. 9a: eine Einzelheit des Schreibkopfes mit gefederter Schreibspitze;
- Fig. 9b: eine Vierkantprismenführung für den Schreibkopf nach Fig. 6,7;
- Fig. 9c: eine Draufsicht auf die Vierkantprismenführung;
- Fig. 10: die den Schnellübertragungsbogen mit einer Aufzeichnungsvorrichtung nach Fig. 3, 4 mit einer Schreibplatte zur Aufzeichnung der Unterkieferbewegungen im Frontzahnbereich;
- Fig. 11: den mit einem Gummiband am Kopf befestigten Schnellübertragungsbogen mit einer zusätzlichen Stirnabstützung und mit über Justierschrauben individuell verstellbaren Seitenarmen zur Ermittlung der genauen Patientenachse;
- Fig. 12: einen Schnellübertragungsbogen mit Ohrsattelauflagen anstelle von Ohroliven;
- Fig. 13: einen Dental-Artikulator mit eingesetzter Schreibplatte nach Fig. 8 in der Einrichtposition (kopfstehend) und einem beweglich gelagerten Zeiger; und
- Fig. 14: eine Querstange des Registrierbogens mit Flächen für ein paralleles Befestigen des linken und rechten Seitenarmes.

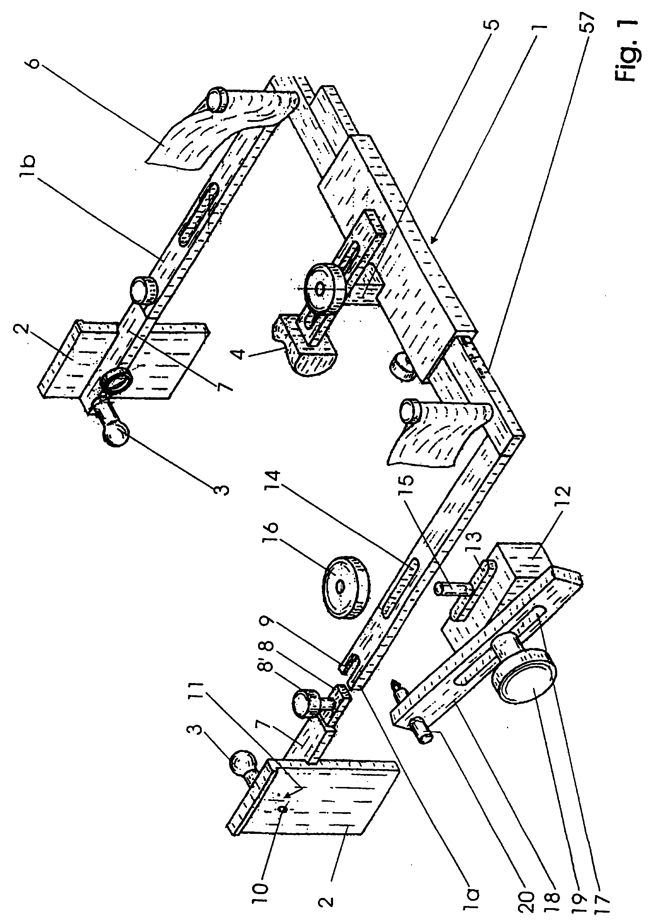

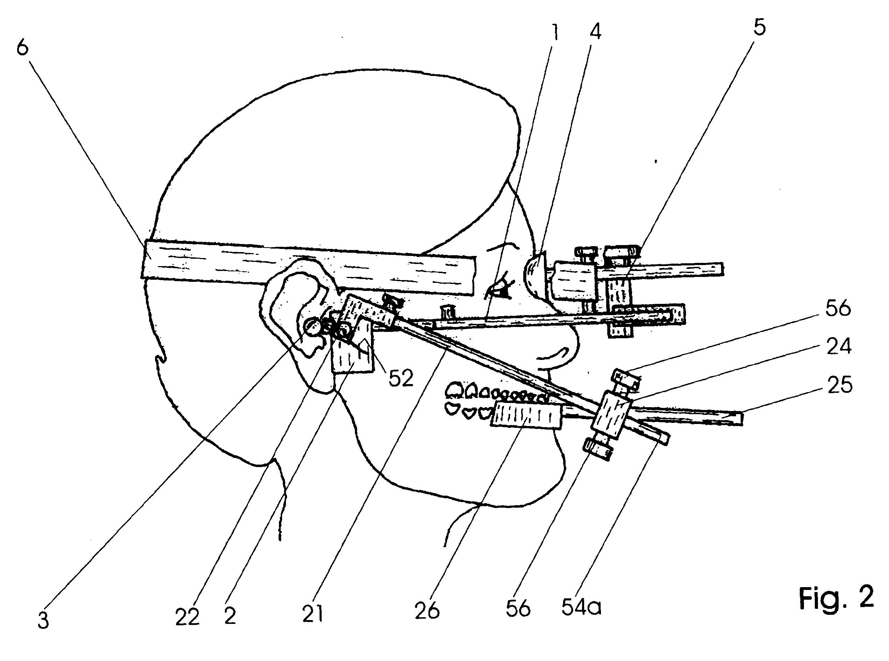

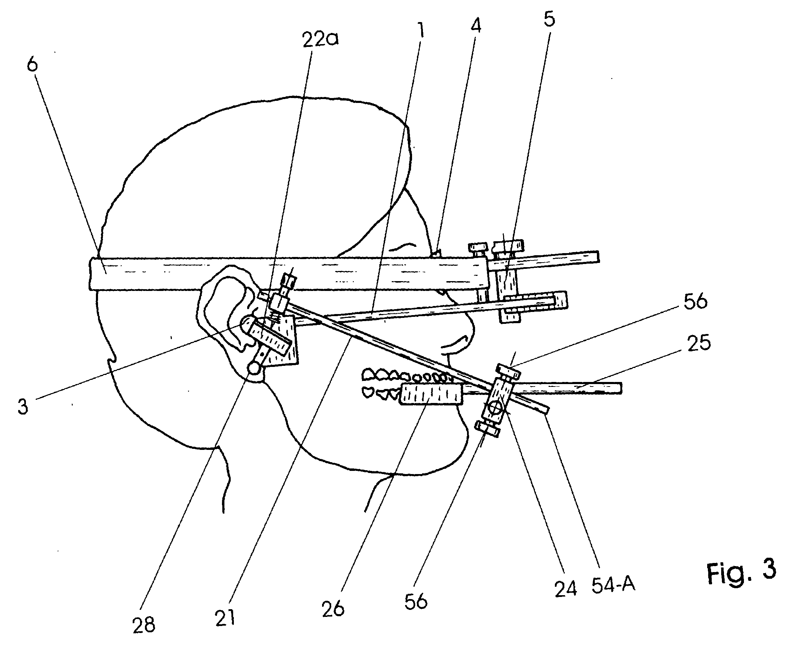

Aus Fig. 1 bis 3 ist eine Aufzeichnungsvorrichtung ersichtlich, die aus einem ortsfest am Kopf eines Patienten befestigbaren und in der Breite einstellbaren Flaggenbogen 1 und zugehörigen saggitalen Flaggen 2 zur Aufzeichnung der Kieferbewegungen besteht. Weiterhin ist am Flaggenbogen 1 eine Skala 57 vorgesehen, die den Abstand der Ohroliven 3 anzeigt und die für die Voreinstellung eines Montagegerätes oder auch eines Artikulators benötigt wird.

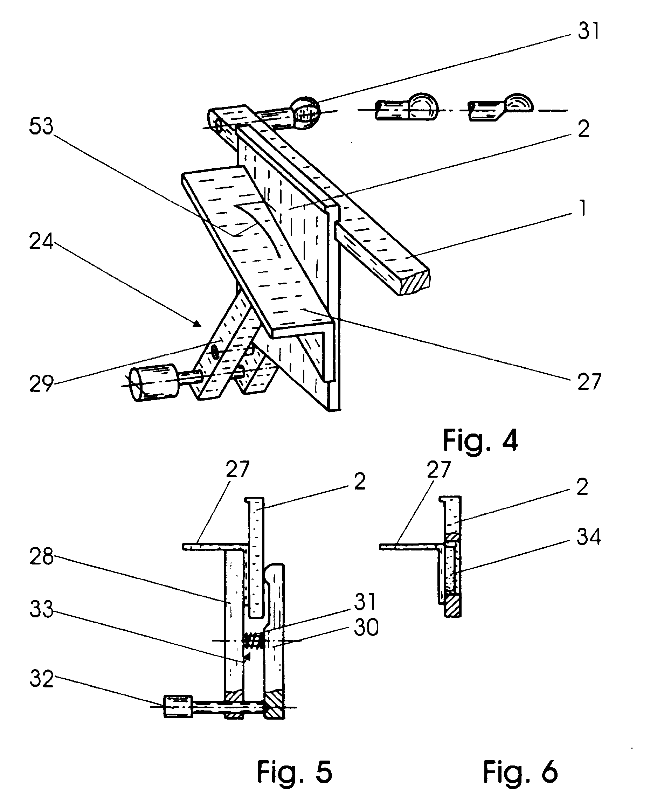

Die Fixierung des Flaggenbogens 1 am Kopf erfolgt dabei mittels Ohroliven 3, die aus den seitlichen Schenkeln des Flaggenbogens 1 hervorstehen und die in den Porus Acusticus einzusetzen sind. Weiterhin ist eine vor dem Kopf befindliche verstellbare Glabellastütze 4 vorgesehen, die über einen abnehmbaren Träger 5 am Flaggenbogen 1 befestigt ist. Anstelle der Ohroliven 3 (Fig. 1) können auch abgeflachte Ohroliven 31 (Fig. 4) verwendet werden. Die Ohroliven 31 sind dabei in Richtung zur Glabellastütze 4 hin abgeflacht.

Um zu erreichen, daß das Kiefergelenk frei beweglich ist und nicht durch die Ohroliven eingeschränkt wird, ist der Flaggenbogen 1 mit einem Gummiband 6 nach hinten gegen den Schädel und/oder die Glabella gespannt. Um projektionsbedinge Aufzeichnungsfehler zu vermeiden, sind die Flaggen 2 möglichst nah seitlich der Kiefergelenke angeordnet.

Die Flaggen 2 und die zugehörigen Ohroliven 3 sind an einem Endstück 7 befestigt, das an den seitlichen Schenkeln 1a und 1b des Flaggenbogens 1 fixierbar ist. Hierzu steht aus dem Endstück 7 ein Paßstück 8 hervor, welches in eine entsprechende Ausnehmung im Schenkel 1a, 1b einsetzbar ist. Die Fixierung erfolgt mittels einer Klemmschraube 8', deren Schaft in eine Gabel 9 im Schenkel 1a, 1b einführbar ist.

In der Flagge 2 befindet sich weiterhin eine Achsbohrung 10 in einer orbiträren Position der Patientenachse. Diese Achsbohrung dient bei geringeren Anforderungen an die Genauigkeit zur Übertragung der Patientenachse auf einen Dental-Artikulator. Bei hohen Genauigkeitsanforderungen wird zunächst der genaue Achspunkt 11 ermittelt, der dann zur Einstellung des Dental-Artikulators verwendet wird. Die genaue Ermittlung dieses Achspunktes 11 wird später an Hand der Zeichnungsfigur 11 beschrieben.

Für die Übertragung der individuellen Patientenachse auf einen Dental-Artikulator ist aus Fig. 1 weiterhin eine Montagevorrichtung 12 ersichtlich, die am Schenkel 1a, 1b befestigt werden kann. Hierzu befindet sich auf der Montagevorrichtung 12 ein Formstück 13, das mit einer Austräsung 14 im Schenkel 1a, 1b formgleich ist. Die Festlegung der Montagevorrichtung 12 am Schenkel 1a, 1b erfolgt mit Hilfe eines Gewindezapfens 15 in Verbindung mit einer Befestigungsschraube 16.

An der Montagevorrichtung 12 ist weiterhin seitlich ein mittels eines in einem Längsschlitz 17 längs verstellbarer Träger 18 vorgesehen, der mit Hilfe einer Feststellschraube 19 an der Montagevorrichtung 12 arretierbar ist. Der Träger 18 dient zur Aufnahme einer Zentrierspitze 20, die wahlweise entweder auf die Achsbohrung 10 oder auf den Achspunkt 11, je nach der gewünschten Genauigkeit der Einstellung des Dental-Artikulators, zu zentrieren ist.

Nach erfolgter Zentrierung der Zentrierspitze 20 ist lediglich das Endstück 7 mit der Flagge 2 und der Ohrolive 3 zu entfernen und der Übertragungsbogen kann am Montagegerät eingesetzt werden.

Die Aufzeichnung der HKN Bahn 52 (Protrusionsbewegung) erfolgt mit Hilfe eines Registrierbogens 21, bestehend aus Seitenarmen 54 oder Seitenarmen 54-A, die mit Klemmen 24 und Klemmschrauben über die Querstange 48 mit dem Bißgabelstiel 25 verbunden sind. An den flaggenseitigen Enden der Seitenarme 54 oder 54-A sind Schreibköpfe 22 mit Schreibstiften 23 angeordnet, die auf den Flaggen 2 beidseitig nach der Bohrung 10 ausgerichtet sind. In der Mitte des Registrierbogens 21, an der Querstange 48, ist der Registrierbogen 21 über eine Klemme (nicht dargestellt) mit dem Bißgabelstiel 25 verbunden.

Bei einer Bewegung des Kiefers in Pro- und Retrusionsrichtung erfolgt eine Bewegung des bevorzugt gefedert gelagerten Schreibstiftes 23 auf der Flagge 2 und damit eine Aufzeichnung dieser Kieferbewegung.

Für die unmittelbare Aufzeichnung der Bennettbewegung ist ein Winkeltisch 27 vorgesehen, der an der Flagge 2 befestigt werden kann. Dieser Winkeltisch 27 kann auf der Flagge 2 entsprechend der natürlichen Gelenkbahnneigung auf den Achspunkt X ausgerichtet werden. Einzelheiten des Winkeltisches 27 gehen aus den Fig. 4 und 5 hervor.

Danach ist der Winkeltisch 27 über eine Klemmvorrichtung 28 mit der Flagge 2 verbunden. Diese Klemmvorrichtung 28 besteht aus einer am Winkeltisch 27 anliegenden Andruckplatte 29 und einer im Abstand dazu angeordneten und mit der Andruckplatte 29 verbundenen schwenkbaren Klemmbacke 30. Die Klemmbacke 30 ist dabei auf einer Stütze 31 schwenkbar gelagert und wird mit Hilfe einer Druckschraube 32 verspannt. Um den Winkeltisch 27 leichter auf die Flagge 2 schieben zu können, werden die Andruckplatte 29 und die Klemmbacken 30 z.B. durch eine Druckfeder auseinandergehalten.

Eine andere Möglichkeit zur sicheren Befestigung des Winkeltisches 27 an der Flagge 2 besteht in der Verwendung einer Magnethalterung 34 (Fig. 6).

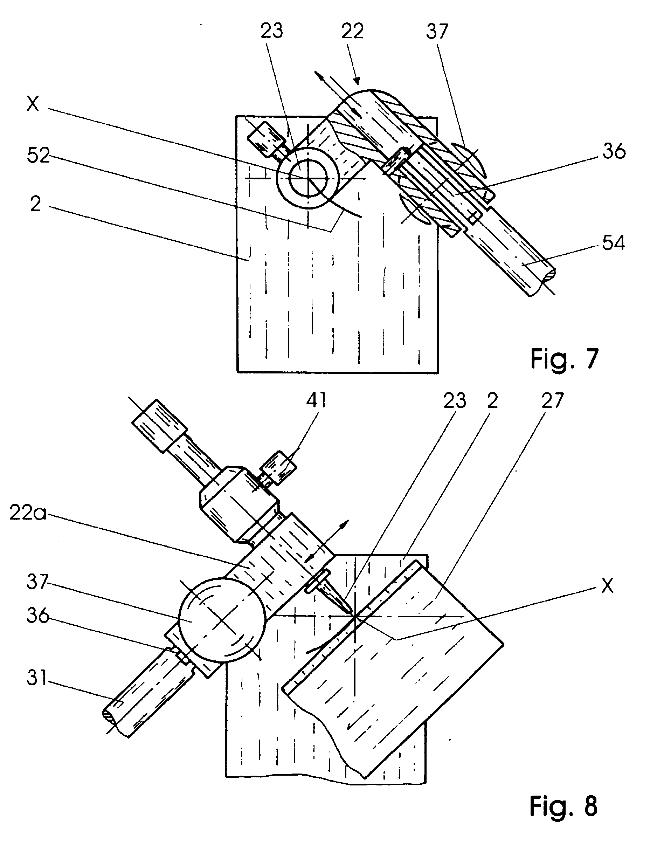

Für die Aufzeichnung der Lateral- bzw. Bennettbewegung auf dem Winkeltisch 27 ist der Schreibkopf 22 für die HKN Gelenkbahn am hinteren Ende des Seitenarmes 54 bzw. 54-A zu entfernen. Befestigt wird der Schreibkopf 22a für die Bennettbewegung am hinteren Ende des Seitenarmes 54 bzw. 54-A (Fig. 7, 8). Die Befestigung des Schreibkopfes 22, 22a erfolgt z.B. über ein Vierkantprisma 36 in Verbindung mit einer Klemmschraube 37. Dabei bleibt die Grundeinstellung bezüglich des Achspunktes X erhalten.

Fig. 8 zeigt einen im Vergleich zu Fig. 7 unverändert eingestellten Seitenarm 54 mit einem Winkeltisch 27 und dem Schreibkopf 22a zur Aufzeichnung der Bennett-Gelenkbahn 53 (Fig. 4), wobei die Schreibspitze automatisch auf den Achspunkt X trifft.

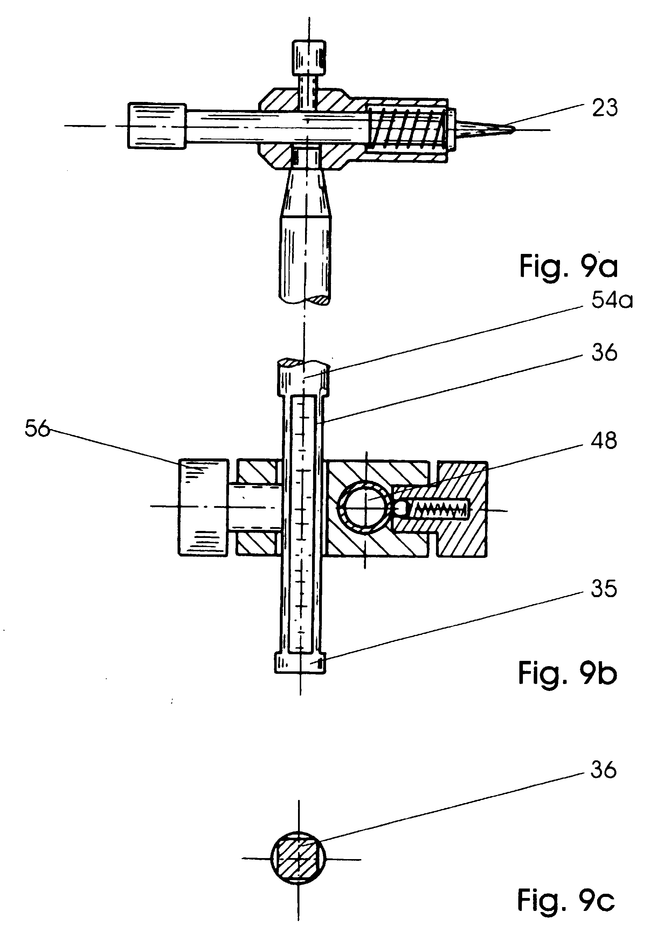

Das Ende der Seitenarme 54, 54-A ist bevorzugt so ausgestattet, daß über eine oder mehrere Flächen die Schreibköpfe 22 und 22a befestigt werden (Fig. 9a - 9c). Das gewährleistet eine sehr sichere und fehlerfreie Positionierung des Schreibkopfes 22 bzw. dessen Schreibstiftes 23 entweder über der Flagge 2 oder über dem Winkeltisch 27. Außerdem kann über das Vierkantprisma 36 eine besonders spielfreie Führung gewährleistet werden.

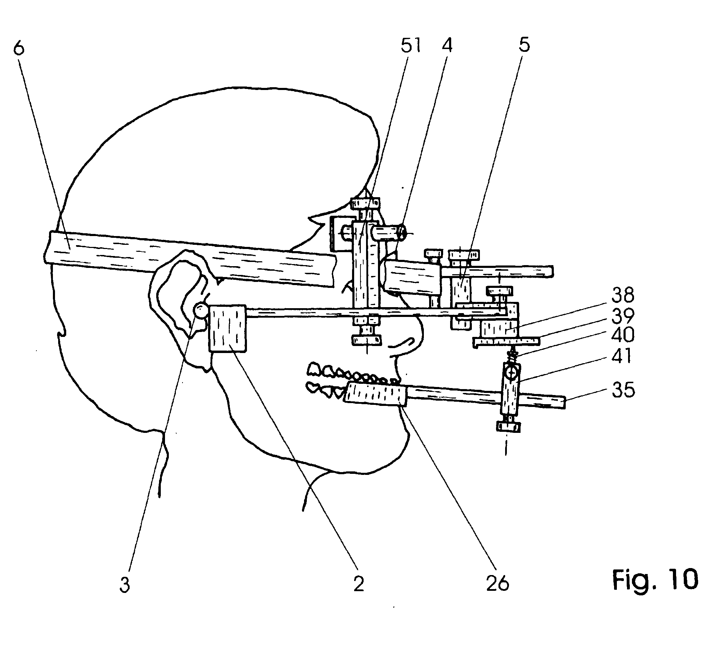

Für die Aufzeichnung der vollständigen Kieferbewegung, d.h. der Bewegung des Frontzahnes ist weiterhin am vorderen Ende des Flaggenbogens 1 eine Halterung 38 zur Aufnahme einer Schreibplatte 39 vorgesehen. Auf diese Schreibplatte 39 ist ein gefederter Schreibstift 40 auf legbar, der am Stiel 25 der Bißgabel 26 mit einer Klemme 41 einstellbar befestigt ist (Fig. 10). Anstelle des Schreibstiftes 40 kann selbstverständlich auch der Schreibkopf 22, 22a (Fig. 7, 8) am Stiel 25 der Bißgabel 26 befestigt werden.

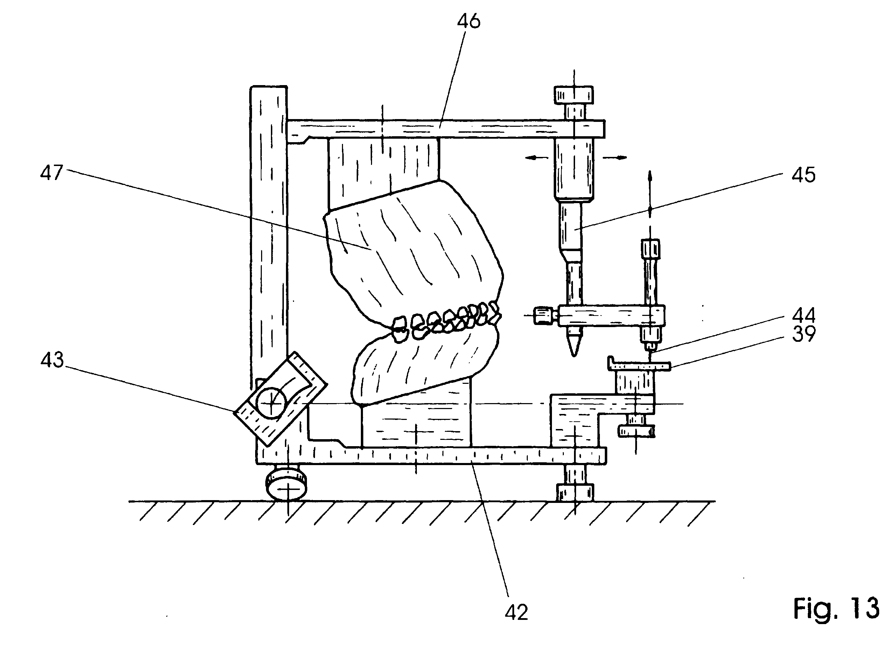

Damit lassen sich auf einfache Weise die Kieferbewegungen, d.h. die Bewegungen des Frontzahnes, aufzeichnen und mit Hilfe dieser Aufzeichnungen kann ein Dental-Artikulator so eingestellt werden, daß dieser exakt die Kieferbewegungen nachvollzieht. Dazu ist die Schreibplatte 39 lediglich am Oberteil 42 des Dental-Artikulators anstelle des sonst verwendeten Incisaltisches zu befestigen. In Fig. 13 ist ein solcher Dental-Artikulator dargestellt, der zum Zwecke der Einstellung der Kondylargelenke 43 auf den Kopf gestellt ist, so daß mit Hilfe eines beweglich gelagerten Zeigers 44, der am Incisalstift 45 befestigt ist, ein Vergleich der bereits am Patienten aufgezeichneten Frontzahnführung (Fig. 10) mit der Bewegung des Unterteiles 46 möglich ist, bzw. der Dental-Artikulator über die Kondylargelenke 43 eingestellt werden kann. Das Kondylargelenk 43 und das im Dental-Artikulator montierte Gipsmodell 47 von Ober- und Unterkiefer sind hier nur schematisch dargestellt.

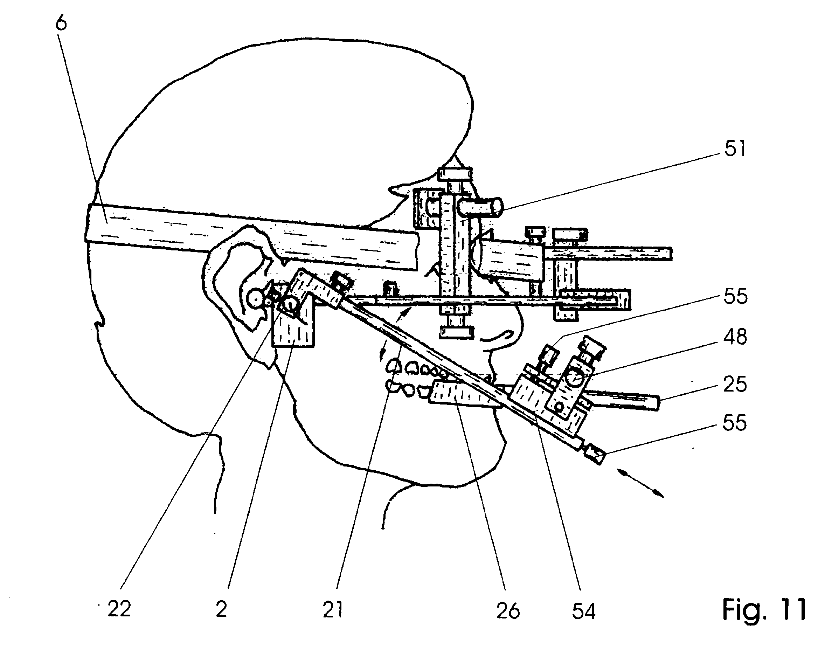

Wenn eine besonders exakte Übertragung der Patientendaten erwünscht ist, dann kann entsprechend Fig. 11 eine genaue Ermittlung der Patientenachse erfolgen. Dazu ist zunächst am Flaggenbogen 1 eine Stirnabstützung 51 zu montieren. Anschließend wird die Bißgabel 26 am Unterkiefer befestigt und über den Stiel 25 und die Querstange 48 mit dem Seitenarm 54 verbunden. Öffnet der Patient seinen Unterkiefer, so führt der Schreibkopf 22 auf der Flagge 2 eine Bewegung aus. Die einstellbaren Seitenarme 54 sind nun so lange durch eine Längs- bzw. Kippbewegung über die Justierschrauben 55 zu verstellen, bis der Schreibkopf 22 gegenüber der Flagge 2 keine Relativbewegung mehr ausführt. Damit ist die genaue Patientenachse ermittelt.

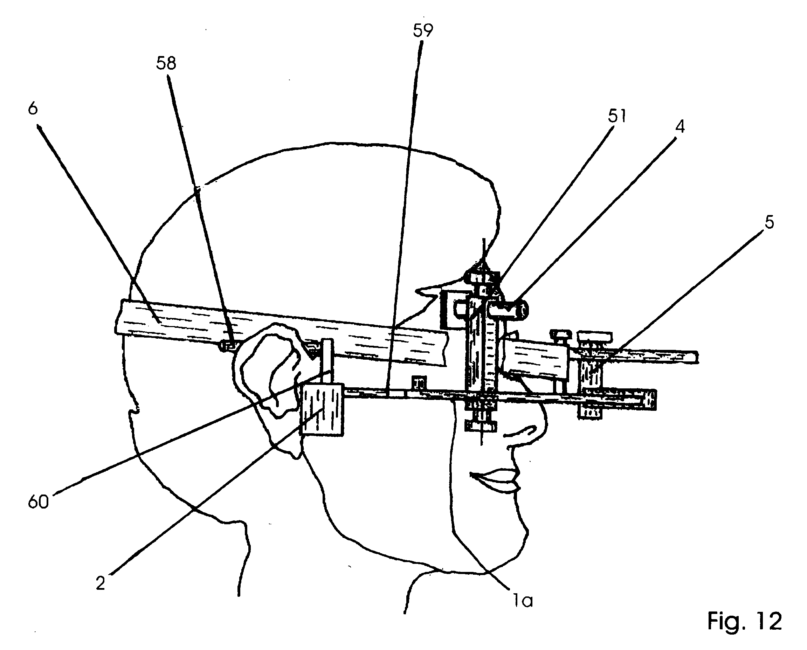

In Fig. 12 ist eine besondere Variante des Übertragungsbogens dargestellt, bei der Ohrsattelauflagen 58 vorgesehen sind, welche die ansonsten erforderlichen Endstücken 7 mit den Ohroliven 3 ersetzen durch ein Endstück 59 für die Ohrsattelauflagen 58. An diesem Endstück 59 kann eine Flagge 2 für eine mechanische oder elektronische Gelenkbahnaufzeichnung befestigt werden. Die Ohrsattelauflagen 58 sind dabei durch senkrechte Stützen 60 jeweils an einem seitlichen Schenkel 1a, 1b des Flaggenbogens 1 befestigt. Um hier eine genaue Anpassung an die anatomischen Gegebenheiten des Patienten zu ermöglichen, kann vorgesehen sein, die Stützen verstellbar auszuführen.

Diese Ausführung des Schnellübertragungsbogens kann insbesondere in solchen Fällen zur Anwendung kommen, wenn die Ohroliyen patientenbedingt nicht eingesetzt werden können.

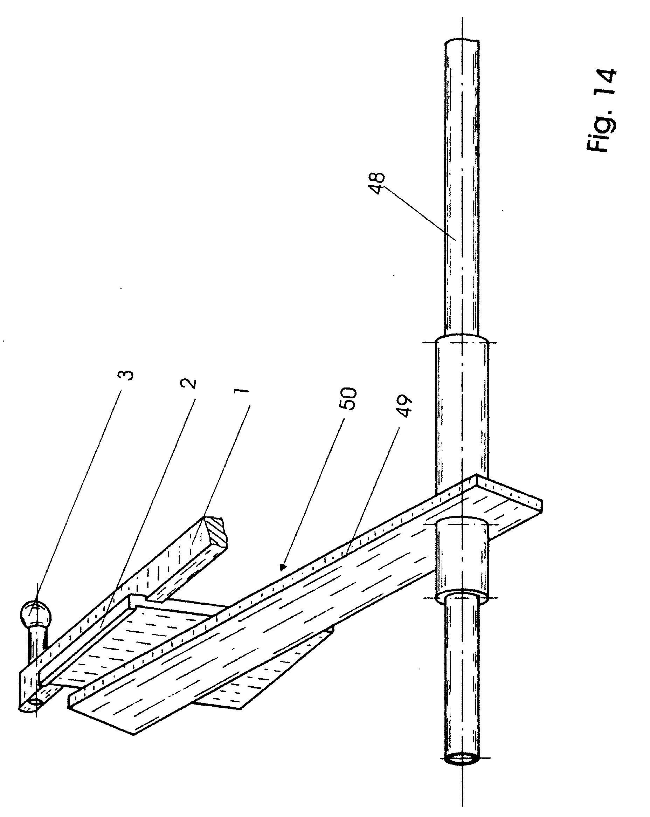

Fig. 14 zeigt noch eine Querstange 48 des Registrierbogens 21 mit Seitenflächen 50 an einem Ausrichtarm 49 für ein paralleles Befestigen des linken und rechten Seitenarmes 54. Dadurch wird es möglich, den Registrierbogen 21 über die Achsbohrungen 10 parallel zum Flaggenbogen 1 am Patienten zu montieren.

### Bezugszeichenliste

- 1: Flaggenbogen
- 1a: Schenkel des Flaggenbogens
- 1b: Schenkel des Flaggenbogens
- 2: Flagge
- 3: Ohrolive
- 4: Glabellastütze, verstellbar
- 5: Träger für Glabellastütze
- 6: Gummiband (Rückhalteband)
- 7: Endstück
- 8: Paßstück
- 8': Klemschraube
- 9: Gabel
- 10: Achsbohrung
- 11: Achspunkt
- 12: Montagevorrichtung
- 13: Formstück
- 14: Ausfräsung
- 15: Gewindezapfen
- 16: Befestigungsschraube
- 17: Längsschlitz
- 18: Träger
- 19: Feststellschraube
- 20: Zentrierspitze
- 21: Registrierbogen
- 22: Schreibkopf
- 23: Schreibstift für HKN-Gelenkbahn
- 22-A: Schreibkopf für die Bennett-Gelenkbahn
- 24: Klemme
- 25: Stiel
- 26: Bißgabel
- 27: Winkeltisch
- 28: Klemmvorrichtung
- 29: Andruckplatte
- 30: Klemmschraube
- 31: abgeflachte Ohrolive
- 32: Druckschraube
- 33: Druckfeder
- 34: Magnethalterung
- 36: Vierkantprisma
- 37: Klemmschraube
- 38: Halterung
- 39: Schreibplatte
- 40: Schreibstift
- 41: Klemme
- 42: Oberteil
- 43: Kondylargelenk
- 44: Zeiger
- 45: Incisalstift
- 46: Unterteil
- 47: Gipsmodell
- 48: Querstrebe
- 49: Ausrichtarm
- 50: Seitenfläche
- 51: Stirnabstützung
- 52: HKN-Bahn
- 53: Bennett Gelenkbahn
- 54: Seitenarme (justierbar)
- 54-A: Seitenarm (voreinstellbar)
- 55: Justierschraube
- 56: Klemmschraube
- 57: Skala
- 58: Ohrsattelauflage
- 59: Endstück
- 60: senkrechte Stütze
- X: Achspunkt, Beginn der Aufzeichnung

## Patentansprüche

1. Schnellübertragungsbogen zur schädelgerechten Übertragung eines Oberkiefergipsmodells von einem Patienten in einen Dental-Artikulator sowie zur Aufzeichnung der achsbezogenen individuellen Kiefergelenkgeometrie der betreffenden Patienten, enthaltend einen Flaggenbogen mit kiefergelenknahen Flaggen und Ohroliven oder Ohrauflägen sowie eine Glabellastütze zur ortsfesten Fixierung am Kopf und einen Registrierbogen, an dem eine Bißgabel zur Betätigung der am Registrierbogen befindlichen Schreibköpfe zur Aufzeichnung der saggitalen Scharnierachsbewegung befestigt ist,
**dadurch gekennzeichnet,**
- daß der Flaggenbogen (1) mittels Federkraft gegen die hintere Gehörgangwand und/oder die Glabella bzw. Stirnabstützung (51) gespannt wird,
- daß die Flaggen (2) jeweils an einem Endstück (7) befestigt sind, das mit dem Flaggenbogen (1) lösbar verbunden ist,
- daß an jeder Flagge (2) ein Winkeltisch (27) winkelverstellbar und lösbar fixierbar ist,
- daß die Schreibköpfe (22, 22a) sowohl auf die Flagge (2), als auch auf den Winkeltisch (27) positionierbar sind, und
- daß neben jeder Flagge (2) eine Zentrierspitze (20) in einer angenommenen oder tatsächlichen Patientenachse positionierbar ist.

2. Schnellübertragungsbogen nach Anspruch 1, **dadurch gekennzeichnet,** daß die Federkraft durch ein Gummiband (6) erzeugt wird, welches den Schnellübertragungsbogen (1) nach hinten am Kopf verspannt.

3. Schnellübertragungsbogen nach einem der Ansprüche 1 oder 2**, dadurch gekennzeichnet,** daß die Flaggen (2) jeweils mit einer Achsbohrung (10) in der Position der angenommenen Patientenachse versehen sind.

4. Schnellübertragungsbogen nach Anspruch 3, **dadurch gekennzeichnet,** daß am Flaggenbogen (1) Mantagevorrichtungen (12) fixierbar sind, die eine auf der Flagge positionierbare Zentrierspitze (20) aufweisen.

5. Schnellübertragungsbogen nach Anspruch 4, **dadurch gekennzeichnet,** daß die Zentrierspitze (20) in einem längs verschiebbaren und an der Montagevorrichtung (12) feststellbaren Träger (18) eingesetzt ist.

6. Schnellübertragungsbogen nach Anspruch 1, **dadurch gekennzeichnet,** daß der Winkeltisch (27) über eine Klemmvorrichtung (28) mit der Flagge (2) verbunden ist.

7. Schnellübertragungsbogen nach Anspruch 6, **dadurch gekennzeichnet,** daß die Klemmvorrichtung (28) aus einer am Winkeltisch (27) anliegenden Andruckplatte (29) und einer im Abstand dazu angeordneten und mit der Andruckplatte (29) verbundenen schwenkbaren Klemmbacke (30) besteht.

8. Schnellübertragungsbogen nach Anspruch 6 und 7, **dadurch gekennzeichnet,** daß die Klemmbacke (30) entgegen einer Federkraft in Richtung zur Andruckplatte (29) schwenkbar ist.

9. Schnellübertragungsbogen nach Anspruch 1, **dadurch gekennzeichnet,** daß der Winkeltisch (27) mit einer Magnethalterung (34) an der Flagge (2) festlegbar ist.

10. Schnellübertragungsbogen nach Anspruch 1, **dadurch gekennzeichnet,** daß der Winkeltisch 27 direkt an den Schenkeln des Flaggenbogens 1a, 1b bzw. an den Endstücken 7 befestigt ist.

11. Schnellübertragungsbogen nach einem der Ansprüche 1 bis 10, **dadurch gekennzeichnet,** daß der Schreibkopf (22) um 90° winkelverdrehbar, axial verstellbar und auswechselbar mit dem Registrierbogen (21) verbunden ist.

12. Schnellübertragungsbogen nach Anspruch 11, **dadurch gekennzeichnet,** daß der Schreibstift (23) des Schreibkopfes (22) federgelagert ist.

13. Schnellübertragungsbogen nach den Ansprüchen 1 bis 12, **dadurch gekennzeichnet,** daß das Vordere Ende des Flaggenbogens (1) mit einer Halterung (38) zur Aufnahme einer Schreibplatte (39) versehen ist, an der ein Schreibstift (40) anlegbar ist, der am Stiel (25) der Bißgabel (26) einstellbar befestigt ist.

14. Schnellübertragungsbogen nach einem der Ansprüche 1 bis 13, **dadurch gekennzeichnet,** daß am Flaggenbogen (1) eine Stirnabstützung (51) befestigbar ist.

15. Schnellübertragungsbogen nach einem der Ansprüche 1 bis 14, **dadurch gekennzeichnet,** daß abgeflachte Ohroliven 31 vorgesehen sind, die in Richtung zur Glabellastütze 4 hin abgeflacht sind.

16. Schnellübertragungsbogen nach Anspruch 1, **dadurch gekennzeichnet,** daß Ohrsattelauflagen (58) vorgesehen sind, die mittels senkrechter Stützen (60) an einem Endstück (59) befestigt ist, das jeweils einem seitlichen Schenkel (1a, 1b) des Flaggenbogens (1) zugeordnet ist.

17. Schnellübertragungsbogen nach Anspruch 16, **dadurch gekennzeichnet,** daß die Endstücken (59) austauschbar an den jeweiligen Schenkeln (1a, 1b) befestigt sind.

18. Schnellübertragungsbogen nach Anspruch 17, **dadurch gekennzeichnet,** daß an dem Endstück (59) eine Flagge (7) für eine mechanische oder elektronische Gelenkbahnaufzeichnung befestigt ist.

19. Schnellübertragungsbogen nach Anspruch 16, **dadurch gekennzeichnet,** daß die Ohrsattelauflagen (58) gegenüber dem Flaggenbogen (1) höhenverstellbar sind.
